(19) Europäisches Patentamt
European Patent Office
Office européen des brevets

(11) **EP 4 693 121 A1**

(12) **EUROPEAN PATENT APPLICATION**

(43) Date of publication:
**11.02.2026 Bulletin 2026/07**

(21) Application number: **24216223.8**

(22) Date of filing: **28.11.2024**

(51) International Patent Classification (IPC):
**G06N 20/20** (2019.01)    **G06N 5/01** (2023.01)
**G06Q 30/018** (2023.01)    **G06Q 10/04** (2023.01)
**G06Q 10/067** (2023.01)    **G06Q 30/0201** (2023.01)
**G06Q 30/0207** (2023.01)    **G06Q 30/0601** (2023.01)
**G06Q 30/0241** (2023.01)    **G06Q 10/0635** (2023.01)

(52) Cooperative Patent Classification (CPC):
**G06N 20/20; G06N 5/01; G06Q 10/04;**
**G06Q 10/0635; G06Q 10/067; G06Q 30/0185;**
**G06Q 30/0201; G06Q 30/0225; G06Q 30/0248;**
**G06Q 30/0609**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **05.08.2024 CN 202411069844**

(71) Applicant: **Alipay (Hangzhou) Information**
**Technology Co., Ltd.**
**Hangzhou, Zhejiang 310000 (CN)**

(72) Inventors:
• **SHA, Jian**
**Hangzhou, Zhejiang Province, 310000 (CN)**
• **ZHANG, Ke**
**Hangzhou, Zhejiang Province, 310000 (CN)**

(74) Representative: **Winter, Brandl - Partnerschaft**
**mbB**
**Alois-Steinecker-Straße 22**
**85354 Freising (DE)**

(54) **SERVICE MODEL TRAINING AND ONLINE UPDATE METHODS AND APPARATUSES**

(57)    Embodiments of this specification provide service model training and online update methods and apparatuses. The service model can include several base learners, and the service model update method can include two parts: offline update and online update. During offline training of the service model, a training concept of increasing the quantity of base learners gradually based on a gradient boosting tree is used. For a newly added base learner used to fit a residual, only a component having a relatively small correlation with a known base learner is fitted by using orthogonal decomposition of a gradient. In an online prediction phase, a weight coefficient of each base learner can be updated by using stream data, and whether a new base learner needs to be added is detected. This implementation provides an effective solution for online update of a model under the gradient boosting tree.

EP 4 693 121 A1

**Description**

**TECHNICAL FIELD**

One or more embodiments of this specification relate to the field of computer technologies, and in particular, to service model training and online update methods and apparatuses.

**BACKGROUND**

With popularization of artificial intelligence applications, a data amount and an update speed of service data are also increasing. Generally, depending on data processing by a machine learning model, artificial intelligence provides real-time, intelligent, and personalized service processing for a user. A process of real-time service processing by using a machine learning model can also be referred to as online prediction. With an increase in online data amount and update speed, problems such as online update efficiency, feasibility, and device performance consumption of a service model are important technical content in an artificial intelligence application field.

**SUMMARY**

One or more embodiments of this specification describe service model training and online update methods and apparatuses, so as to alleviate one or more problems mentioned in the background.

According to a first aspect, a service model training method is provided, where a service model is a weighted form of several base learners, and the method includes: multiple training periods added with a base learner, and in a single training period: obtaining each training sample, where a single training sample has a corresponding service feature and service target value, and a predicted value obtained by processing the service feature by using a current service model; determining a first gradient vector of the current service model on each training sample, where a single element of the first gradient vector corresponds to a gradient determined based on a single training sample; separately performing orthogonal decomposition of the first gradient vector for each base learner in the current service model, so as to update the first gradient vector by using a gradient component perpendicular to each base vector, where a single base vector is formed by a predicted value of a corresponding single base learner for each training sample; and obtaining a new base learner and its weight with an objective of minimizing a residual determined according to an updated first gradient vector, so as to update the current service model.

In an embodiment, the determining a first gradient vector of the current service model on each training sample includes: determining a predicted loss according to a sum of losses of the current service model on each training sample based on a comparison between the service target value and the predicted value of each training sample; and determining the first gradient vector according to a respective partial derivative of the predicted loss for a prediction result in each training sample.

In an embodiment, the current service model includes a first base learner, and the separately performing orthogonal decomposition of the first gradient vector for each base learner in the current service model, so as to update the first gradient vector by using a gradient component perpendicular to each base vector includes: determining a first base vector corresponding to the first base learner, where a single dimension of the first base vector is a processing result of processing a single training sample by using the first base learner; determining a first component of the first gradient vector in a direction of the first base vector according to a product of the first gradient vector and the first base vector; and updating the first gradient vector by using a difference between the first gradient vector and the first component as a second component of the first gradient vector in a vertical direction of the first base vector.

In a further embodiment, the first component is a product of the first base vector and a first coefficient, and the first coefficient is a ratio of the product of the first gradient vector and the first base vector to a modulus of the first base vector.

In a further embodiment, the first base learner corresponds to a first weight, and the method further includes: using the first coefficient as a gradient corresponding to the first weight, and updating the first coefficient by using a predetermined learning rate in a gradient direction.

In an embodiment, the obtaining a new base learner and its weight with an objective of minimizing a residual determined according to an updated first gradient vector, so as to update the current service model includes: determining a second base learner as a new base learner with an objective of minimizing a predicted loss on each training sample after a base learner is added; determining a second weight corresponding to the second base learner with an objective of minimizing a predicted loss of the current service model on each training sample and a fitting result of the new base learner to the residual; and updating the current service model according to a product of the second weight and the second base learner.

According to a second aspect, a service model online update method is provided, where a service model is a weighted sum of several base learners and is trained in the manner of the first aspect; and the method includes:

determining several first samples of a training set and several second samples of a test set according to current incremental data; updating, by using the several first samples, weights separately corresponding to each base learner; and checking a model indicator of an updated service model by using the several second samples to determine, according to an indicator value of the model indicator, whether to add a new base learner to the service model.

In an embodiment, the updating, by using the several first samples, weights separately corresponding to each base learner includes: determining a gradient of each weight according to a service processing result of the service model for each first sample; and updating each weight according to a corresponding gradient by using a predetermined learning rate.

In an embodiment, each base learner includes a third base learner, the third base learner corresponds to a third weight, and the determining a gradient of each weight according to a service processing result of the service model for each first sample includes: obtaining a first predicted loss of the service model by using the service processing result of the service model for each first sample; and determining a gradient respectively corresponding to each weight under the first predicted loss, where for a single weight, a corresponding gradient is determined in the following manner: determining a first-order derivative and a second-order derivative of the first predicted loss for the single weight; and obtaining the gradient of the single weight by using a product of an inverse of the second-order derivative and the first-order derivative.

In an embodiment, a new base learner and a corresponding weight are added to the service model in the manner of the first aspect to update the service model when the model indicator does not satisfy a predetermined condition.

According to a third aspect, a service model training apparatus is provided, where a service model is a weighted form of several base learners, and the apparatus includes:

an acquisition unit, configured to obtain each training sample, where a single training sample has a corresponding service feature and service target value, and a predicted value obtained by processing the service feature by using a current service model;

a determining unit, configured to determine a first gradient vector of the current service model on each training sample, where a single element of the first gradient vector corresponds to a single training sample;

a decomposition unit, configured to separately perform orthogonal decomposition of the first gradient vector for each base learner in the current service model, so as to update the first gradient vector by using a gradient component perpendicular to each base vector, where a single base vector is formed by a predicted value of a corresponding single base learner for each training sample; and

an update unit, configured to obtain a new base learner and its weight with an objective of minimizing a residual determined according to an updated first gradient vector, so as to update the current service model.

According to a fourth aspect, a service model online update apparatus is provided, where a service model is a weighted sum of several base learners and is trained by using the apparatus according to the third aspect; and the online update apparatus includes:

a sample determining unit, configured to determine several first samples of a training set and several second samples of a test set according to current incremental data;

a weight update unit, configured to update, by using the several first samples, weights separately corresponding to each base learner; and

an indicator detection unit, configured to check a model indicator of an updated service model by using the several second samples to determine, according to an indicator value of the model indicator, whether to add a new base learner to the service model.

According to a fifth aspect, a computer-readable storage medium that stores a computer program is provided, and when the computer program is executed on a computer, the computer is caused to perform the methods according to the first aspect or the second aspect.

According to a sixth aspect, a computing device is provided and includes a memory and a processor. Executable code is stored in the memory, and when executing the executable code, the processor implements the method of the first aspect or the second aspect.

According to the apparatuses and the methods provided in the embodiments of this specification, for a service model under a gradient boosting tree architecture, in a model training phase, for a newly added base learner used to fit a residual, only a component having a relatively small correlation with a known base learner is fitted by using orthogonal decomposition of a gradient, so as to enlarge a function space of the base learner and enable a weighting coefficient of each base learner to have learnability. In an online prediction phase, the weight coefficient of each base learner can be updated by using stream data, so an effective solution can be provided for continuous online update of a gradient boosting tree model, so as to avoid infinite enlargement of a scale of a prediction model. In a case in which service processing efficiency of the prediction model is maintained, a service processing result of the prediction model is optimized, so the prediction model continuously adapts to new service data.

## BRIEF DESCRIPTION OF DRAWINGS

To describe the technical solutions in the embodiments of this specification more clearly, the following briefly describes the accompanying drawings needed for describing the embodiments. Clearly, the accompanying drawings in the following descriptions show merely some embodiments of this specification, and a person of ordinary skill in the art can still derive other drawings from these accompanying drawings without creative efforts.

FIG. 1 is a schematic diagram illustrating a specific implementation scenario, according to this specification;
FIG. 2 is a schematic principle diagram illustrating gradient orthogonal decomposition under a technical concept, according to this specification;
FIG. 3 is a schematic flowchart illustrating service model training, according to an embodiment of this specification;
FIG. 4 is a schematic flowchart illustrating service model online update, according to an embodiment of this specification;
FIG. 5 is a structural block diagram illustrating a service model training apparatus, according to an embodiment of this specification; and
FIG. 6 is a structural block diagram illustrating a service model online update apparatus, according to an embodiment of this specification.

## DESCRIPTION OF EMBODIMENTS

The solutions provided in this specification are described below with reference to the accompanying drawings.

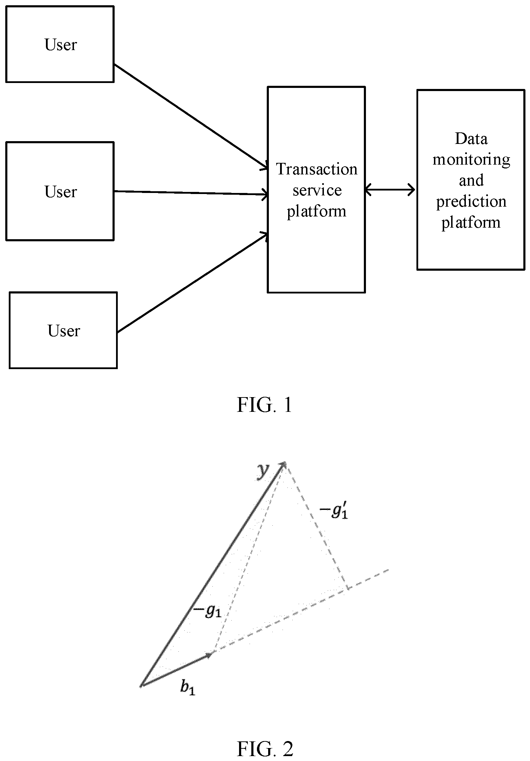

FIG. 1 shows a specific implementation scenario in the technical solution of this specification. This implementation scenario is a scenario of user transaction services (such as shopping and resource exchange services) involving online data and fund security. Specifically, a user can perform a transaction service by using a transaction service platform, and a data monitoring and prediction platform can monitor and predict user behavior on the transaction service platform, so as to predict whether a risky operation such as user fraud or a gray market transaction exists. The user behavior here can include, for example, context information of a current transaction of the user, and the transaction context information can include, for example, a transaction amount, a transaction manner (payment manner, collection manner, etc.), an account status, etc. of the user. The user behavior information can be combined with historical transaction information, user attribute information, etc. of the user to determine whether a risky operation exists. For example, the historical transaction information includes a historical transaction frequency, a historical transaction preference, historical transaction context information, etc. The user attribute information can include basic information such as user registration duration, user registration location, and occupation. A risk of a user operation can be predicted by aggregating the user behavior information.
In the implementation scenario shown in FIG. 1, to have relatively high prediction accuracy, a prediction model for online prediction can be implemented by using a gradient boosting tree (Boosting machine learning algorithm) mechanism. In the gradient boosting tree mechanism, a single base learner (for example, a decision tree) is used to attempt to correct a prediction error (for example, a residual) of a current model, so as to iteratively train multiple base learners, and finally, weighting is performed on a prediction result of each obtained base learner to obtain a final prediction model. Specifically, in a single training step, a residual of the current model (a difference between a predicted value and a sample label; an initial predicted value can be a mean value of the sample label, etc.) is determined by using a current predicted value obtained from a training sample processed by the current model, a base learner is added to fit the residual (the residual is used as a learning target), and a current step (a learning rate) is found to be a better value through cross-validation or linear search, and this current step is used as a weight of the newly added base learner and superimposed on the prediction model to update the current model and the predicted value. A process of fitting the residual by using the base learner can be understood as follows: A model loss advances in a direction of gradient descent, and addition of each base learner corresponds to one update of gradient descent.
Some conventional gradient boosting tree algorithms (for example, LightGBM or XGBoost) need to use full data to train a new base learner (for example, a decision tree) to fit a residual in a single iteration process. In an online prediction process, data is streaming (updated in real time or at a relatively small time interval), for example, updated once every minute, updated once every hour, etc. As such, if the prediction model based on a gradient boosting tree is to be updated online (Online Updating), full data cannot be obtained during the training process because the training data are stream data, and if the residual is fitted by adding a base learner, the quantity of base learners will be increasing, which reduces computational efficiency of the prediction model.
In view of this, this specification provides a service model update method and a service processing method by using a service model, which are used for service processing based on a gradient boosting tree architecture. Specifically, each base learner is considered as a base function in harmonic analysis, and a weight of the base learner is equivalent to a coefficient corresponding to the base function. In a process of training a gradient boosting tree model, a gradient is orthogonally decomposed, and a new base learner learns only gradient information in a new direction, so a correlation between base learners is as small as possible, all implicit dimensions are covered as possible, a model space in which the base learner is located is expanded, and a weighting coefficient of each base learner is enabled to have learnability.

Referring to FIG. 2, assume that y is a target to be learned, $b_1$ is a linear space in which an existing base learner is located, and a residual of a data space is $-g_1$. A conventional boosting method may directly learn the data residual $-g_1$. However, in the technical concept of this specification, the residual $-g_1$ can be orthogonally decomposed, so as to obtain two components separately parallel to and perpendicular to $b_1$. The vertical component is denoted as $-g_1'$, and the vertical component $-g_1'$ is a gradient data component that needs to be fitted by a new base learner. The component parallel to b 1 can be superimposed on $b_1$. In this case, a weight coefficient of each base learner can also be used as an adjustable parameter.

As such, in an online prediction phase, the weight coefficient of each base learner can be updated by using stream data, so an effective solution can be provided for continuous online update of a gradient boosting tree model, so as to avoid infinite enlargement of a scale of a prediction model. In a case in which service processing efficiency of the prediction model is maintained, a service processing result of the prediction model is optimized, so the prediction model continuously adapts to new service data.

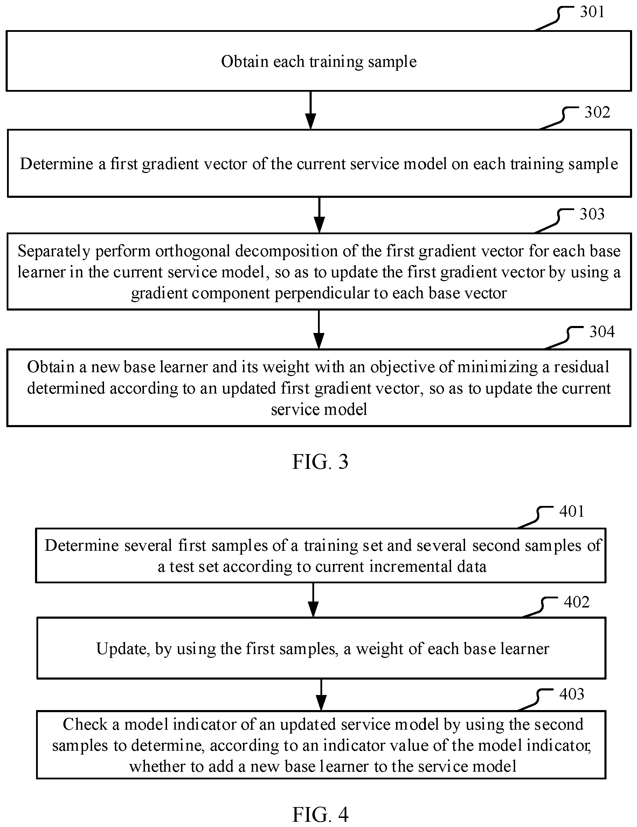

The following describes the technical concept of this specification in detail with reference to embodiments shown in FIG. 3 and FIG. 4.

FIG. 3 is a schematic flowchart illustrating service model training, according to an embodiment. The process can be executed by a computer, a device, or a server having a specific computing capability. A service model here can be implemented based on a gradient boosting tree, and includes several base learners of a tree structure. The quantity of base learners can be increased with a training period. The service model training process provided in this embodiment of this specification can be updated for a model in a service model offline training phase. The service model training process can include multiple training periods for updating the service model by using offline data. A single base learner is added to a single training period.

As shown in FIG. 3, in a single training period, the following steps can be included: Step 301: Obtain each training sample, where a single training sample has a corresponding service feature and service target value, and a predicted value obtained by processing the service feature by using a current service model; step 302: determine a first gradient vector of the current service model on each training sample, where a single element of the first gradient vector corresponds to a gradient determined based on a single training sample; step 303: separately perform orthogonal decomposition of the first gradient vector for each base learner in the current service model, so as to update the first gradient vector by using a gradient component perpendicular to each base vector, where a single base vector is formed by a predicted value of a corresponding single base learner for each training sample; and step 304: obtain a new base learner and its weight with an objective of minimizing a residual determined according to an updated first gradient vector, so as to update the current service model.

First, in step 301, each training sample is obtained, where a single training sample has a corresponding service feature and service target value, and a predicted value obtained by processing the corresponding service feature by using the current service model.

The training sample can be determined by using pre-collected service data. For example, a single training sample can have a corresponding service feature and service target value (for example, a sample label value). The service data can be related to a specific service scenario. For example, in the service scenario involving online data and fund security shown in FIG. 1, in a case in which a prediction target of the service model is whether a risky operation such as user fraud or a gray market transaction exists, and service data of a single training sample can include: context information of a current transaction of a user, historical transaction information, user attribute information, whether the current transaction involves a risky operation, etc. Based on the context information of the current transaction of the user, the historical transaction information, and the user attribute information, a corresponding service feature (for example, denoted as x) can be extracted. Based on whether the current transaction involves a risky operation, a service target value (for example, denoted as y) can be determined. If a risky operation is involved, the service target value is 1; otherwise, the service target value is 0. The service feature and the target value used to describe whether a risky operation such as user fraud and gray market transaction exists can constitute a training sample.

It can be understood that, in a gradient boosting tree mechanism, a service model can be continuously updated by adding a base learner. The current service model is a service model obtained after a base learner is added during training in a previous training period. For example, if the current training period is an mth training period, the current service model can be denoted as $F_{m-1}(x)$. Assume that an initial base learner is denoted as $f_0(x)=cont$, the current service model can be denoted as $F_{m-1}(x)=\sum_{j=1}^{m-1} \rho_j f_j(x) + cont$. $f_j$ is a base learner determined in a jth training period, for example, is denoted as a jth base learner, $\rho_j$ is a weight of the jth base learner, and cont is a constant term, and can be an

initial learner $f_0$(x) determined by using a mean value of a target value of each training sample. In a current training period, a service feature of each training sample can be further processed by using a current service model $F_m$(x), to obtain each predicted value, for example, denoted as $F_{m-1}(x_1)$, $F_{m-1}(x_2)$, ..., and $F_{m-1}(x_n)$, where n is the quantity of training samples. Each predicted value can be predetermined (for example, determined after the service model is updated in a previous training period), or can be determined in the current training period, which is not limited here.

Then, the first gradient vector of the current service model on each training sample is determined by using step 302.

It can be understood that a gradient describes a slope of a model loss of the current service model at a corresponding point. In a sample space formed by a training sample, a single training sample can correspond to a single point, a corresponding gradient can be determined by using a derivative of the model loss to a single predicted value, and the model loss is a result of comparison between a corresponding single predicted value and a single target value. For example, the current service model is $f(x)=F_{m-1}(x)$, a corresponding model loss $L(y_i, f(x_i))$ is determined according to a predicted value $f(x_i)$ of an ith training sample and a target value $y_i$ (the model loss can be determined in a manner of square loss, absolute loss, cross-entropy loss, etc.), and a gradient corresponding to the ith training sample can be denoted as:

$g_i = [\partial L(y_i, f(x_i))/\partial f(x_i)]|_{f(x)=F_{m-1}(x)}$ . For n training samples, corresponding gradients are separately determined, and a first gradient vector with n dimensions can be obtained: $g = (g_1, g_2, ..., g_n)^T$.

Then, in step 303, orthogonal decomposition of the first gradient vector is separately performed for each base learner in the current service model, so as to update the first gradient vector by using the gradient component perpendicular to each base vector.

Here a single base vector can be formed by a predicted value of a corresponding single base learner for each training sample. For example, a predicted value obtained by processing each training sample by the jth base learner $f_j$(x) is $f_j(x_1)$, $fj(x_2)$, ..., and $f_j(x_n)$. Assuming $f_j(x_i)=b_{ji}$, where j=1, 2, ..., n, a corresponding base vector can be denoted as $b_j=(b_{j1}, b_{j2}, ..., b_{jn})$.

To obtain a new base learner with the lowest possible similarity to an existing base learner, the first gradient vector can be orthogonally decomposed in the direction of the base vector (a direction $b_1$ in FIG. 2) and the direction perpendicular to the base vector (a direction $-g_1$' in FIG. 2), for example, denoted as $g= g_\perp + g_{//}$. $g_{//}$ represents a gradient in the direction of the base vector, and can be used as a component for performing linear weighted summation on the base vector, and $g_\perp$ represents the direction perpendicular to the base vector, and is a gradient component that can be reserved for constructing a new base learner. A method for orthogonal decomposition can be any reasonable decomposition method. In this specification, matrix multiplication is used as an example for description.

A person skilled in the art can understand that a weight coefficient of each base learner is denoted as a weight vector $P=(\rho_1, \rho_2, ..., \rho_{m-1})^T$, and each base vector can form a base matrix $B=(b_1, b_2, ..., b_{m-1})^T$, then $g_{//}=P \cdot B$. Therefore,

$P=(\frac{g \cdot b_1}{\|b_1\|^2}, \frac{g \cdot b_2}{\|b_2\|^2} \cdot\cdot\cdot\cdot\cdot\cdot \frac{g \cdot b_{m-1}}{\|b_{m-1}\|^2})$ can be obtained where $\|b_j\|^2 = b_j \cdot b_j$ , that is, P is a function of the gradient vector g, and $g \cdot b_j$ can be considered as a mapping length of mapping the first gradient vector g to the base vector $b_j$. $\frac{g \cdot b_j}{\|b_j\|^2}$ describes a ratio $\delta\rho_j$ of the mapping length to a modulus of the base vector $b_j$, and a component of the gradient vector g in the base vector $b_j$ can be: $\delta\rho_j \cdot b_j$. As such, the weight vector P can be updated based on the gradient vector g.

According to an embodiment, on one hand, the component in the direction of the base vector $b_j$ is subtracted from the gradient g to obtain a component reserved in the direction perpendicular to $b_j$, and the gradient can be updated to: $g = g - \delta\rho_j \cdot b_j$; on the other hand, the ratio $\delta\rho_j$ is also a gradient component of the weight $\rho_j$ in the direction parallel to the base vector $b_j$, and based on the gradient component $\delta\rho_j$ in the direction parallel to the base vector $b_j$, the weight can be updated to: $\rho_j = \rho_j - l_r\delta\rho_j$ in the following manner, where $l_r$ is a predetermined learning rate. As such, for each base learner, gradient orthogonal decomposition can be successively performed, the first gradient vector g is cumulatively updated, and respective weight coefficients $\rho_j$ are separately updated.

In another embodiment, orthogonal decomposition can alternatively be performed on the first gradient vector in another manner, and details are omitted here for simplicity.

Further, in step 304, a new base learner and its weight are obtained with the objective of minimizing the residual determined according to the updated first gradient vector, so as to update the current service model.

According to the technical concept of this specification, a new base learner needs to learn an updated gradient. Therefore, a residual that the new base learner needs to fit can be determined according to the updated first gradient vector, for example, denoted as $\tilde{y}$. g is a vector with n dimensions, and is respectively corresponding to n training samples.

As such, it can be determined that the residual $\tilde{y}$ is: $\tilde{y} = \sum_{i=1}^{n} \tilde{y}_i = -\sum_{i=1}^{n} \tilde{g}_i$ , where i is an ith training sample, and is a gradient component in the updated first gradient vector and corresponding to the ith training sample, $\tilde{y}_i=-\tilde{g}_i$.

Further, to fit the residual, a new base learner $f_m$(x) can be set, so a model loss corresponding to the new base learner f(x) is minimized. The model loss corresponding to the base learner f(x) can be a sum of comparison between a predicted value $f_m(x_i)$ (i=1, 2, ..., n) obtained by processing each training sample and a respective residual. For example, the model loss is denoted as $\sum_{i=1}^{n} L(\tilde{y}_i, \beta f(x_i))$, where β is a weight coefficient of the base learner $f_m(x)$. To minimize a fitting result for the residual by the new base learner $f_m(x)$, β and a parameter in $f_m(x)$ can be adjusted to minimize a predicted loss, for example, denoted as $(f_m(x), \beta_m) = \arg\min_{(f,\beta)} \sum_{i=1}^{n} L(\tilde{y}_i, \beta f(x_i))$, and argmin(f, β) represents taking f and β that minimize a subsequent polynomial, which are denoted as $f_m(x)$ and $\beta_m$.

Therefore, the base learner $f_m(x)$ is added to the current service model, to obtain an updated service model $F_m(x)=F_{m-1}(x)+f_m(x)=\sum_{j=1}^{m} \rho_j f_j(x) + cont$. In some optional embodiments, in a case in which the base learner $f_m(x)$ is fixed, the weight of the base learner $f_m(x)$ can be further updated in the following manner, so a predicted loss under a new service model is minimized, and an updated weight is denoted as $\rho_m$: $\rho_m = \arg\min_{\rho} \sum_{i=1}^{n} L(y_i, F_{m-1}(x_i) + \rho f_m(x_i))$.

As such, after multiple training periods, M base learners can be obtained, so as to form an offline trained gradient boosting tree model in a corresponding service scenario (for example, a service scenario involving online data and fund security). M can be a predetermined hyper parameter, for example, 100, or can be the quantity of training periods obtained when a training end condition is met according to an actual training process. For example, the training end condition can be that a similarity between a current gradient vector and at least one base vector is greater than a predetermined threshold. It can be understood that in this case, the current gradient vector is close to a base vector, it is of little significance to learn a new base learner, and only a weight of the base learner can be updated.

In the gradient boosting tree model obtained through offline training in the previous embodiment, because a correlation between base learners is relatively small, a function space in which the base learner is located can be expanded, so the function space satisfies an online service processing process similar to training sample data distribution, and continuous fine model tuning can be performed by updating a weight.

It can be understood that a trained gradient boosting tree model can be used as a service model for online service processing, for example, detecting whether there is a risky operation such as user fraud or a gray market transaction. To ensure accuracy of online prediction, online service data can be used to dynamically adapt and update the service model. It can be understood that the online data are generally stream data, for example, can be updated once each minute or each hour. As such, the service model can be updated online by using incremental data generated online.

FIG. 4 is a schematic flowchart illustrating service model online update, according to an embodiment. The process can be executed by a computer, a device, or a server having a specific computing capability. As shown in FIG. 4, a process of service model online update can include the following steps: Step 401: determine several first samples of a training set and several second samples of a test set according to current incremental data; step 402: update, by using the first samples, a weight of each base learner; and step 403: check a model indicator of an updated service model by using the second samples to determine, according to an indicator value of the model indicator, whether to add a new base learner to the service model.

First, in step 401, several first samples of the training set and several second samples of the test set are determined according to the current incremental data.

It can be understood that online service data are stream data, and can be collected at a predetermined time interval, for example, collected once every 10 minutes or collected one every 1 hour. Data collected during a single predetermined time interval is recorded as incremental data of one batch. Incremental data of each batch can be used to update the service model once. Incremental data of a batch currently used to update the service model can be recorded as current incremental data.

Specific service data can be determined according to a corresponding service scenario. For example, in the service scenario involving online data and fund security, in a case in which a prediction target of the service model is whether a risky operation such as user fraud or a gray market transaction exists, and service data of a single training sample can include: context information of a current transaction of a user, historical transaction information, user attribute information, whether the current transaction involves a risky operation, etc. A corresponding service feature can be extracted from the service data, and a target value describing whether a risky operation such as user fraud and gray market transaction exists can be determined. The service feature and the target value constitute a training sample.

According to the current incremental data, two sample sets can be determined, one as the training set and one as the test set. For ease of description, here, a sample in the training set can be recorded as a first sample, and a sample in a test set can be recorded as a second sample.

The weight of each base learner is then updated using each first sample through step 402.

It can be understood that a predicted value of the service model is determined by the service model f(x), and the predicted loss L is determined through comparison between the predicted value and the target value y, for example, is denoted as L(y, f(x)). To update the weight, the service model is considered as a function of the weight and the service feature, a model parameter in each base learner is considered as a fixed value, and the predicted loss can be further denoted as L(y, ρ, x). A gradient of each weight $\rho_j$ (j=1, 2, ..., M') can be determined according to the predicted loss, where M' represents the current quantity of base learners of the service model, and is greater than or equal to M.

According to a possible design, a corresponding predicted loss can be determined by sequentially using each first sample, and a partial derivative of each weight $\rho_j$ under a corresponding sample and predicted loss can be used as a corresponding gradient. When the weight is updated by using the gradient, a single weight can be updated by using a gradient corresponding to a single first sample, or can be updated by using a gradient mean value corresponding to multiple first samples.

According to some other possible designs, to better optimize the gradient of each weight, the gradient can be expressed using a Taylor series expansion formula and based on Taylor series expansion. For example, the current weight is denoted as $\rho_0$, and second-order Taylor expansion is denoted as:

$$L(y, \boldsymbol{x}, \boldsymbol{\rho}_0 + \nabla \boldsymbol{\rho}) \approx L(y, \boldsymbol{x}, \boldsymbol{\rho}_0) + \nabla \boldsymbol{\rho}^T \nabla L(y, \boldsymbol{x}, \boldsymbol{\rho}_0) + \frac{1}{2} \nabla \boldsymbol{\rho}^T \Delta L(y, \boldsymbol{x}, \boldsymbol{\rho}_0) \nabla \boldsymbol{\rho}$$ .

$\nabla_\rho$ is a change amount of a weight vector $\rho$ at $\rho_0$, and $\nabla L(y, x, \rho_0)$ and $\Delta L(y, x, \rho_0)$ are respectively a first-order derivative and a second-order derivative of the predicted loss L for the weight vector $\rho$. Therefore, it can be understood that $\nabla \rho = -(\Delta L(y,x,\rho_0))^{-1} \nabla L(y,x,\rho_0)$. As such, the gradient $v_t = -\nabla \rho$ of the weight vector $\rho$ can be determined according to the first-order derivative and the second-order derivative of the weight vector $\rho$ at $\rho_0$.

To further clarify sustainable updates of each base learner in the service model, a weight after a previous update is represented by $\rho_{t-1}$, and an updated value in a current update period is represented by $\rho_t$. Let the first-order derivative of $\rho$ at $\rho_{t-1}$ be denoted as $g_t$, then $g_t = \nabla L(y_t, x_t, \rho_{t-1})$, $v_t = (\Delta L(y_t, x_t, \rho_{t-1}))^{-1} g_t$. Therefore, the weight vector $\rho$ formed by the weight of each base learner can be updated to: $\rho_t = \rho_{t-1} - l_r v_t$, and $l_r$ is a predetermined learning rate.

In another possible design, the weight of each base learner can alternatively be updated in another manner, and details are omitted here for simplicity. The update of the weight is the update of the service model.

Further, in step 403, the model indicator of the updated service model is checked by using each second sample, so as to determine, according to the indicator value of the model indicator, whether to add a new base learner to the service model.

To detect whether the updated service model adapts to a new service data need, each second sample can be used to check the model indicator of the updated service model, and the indicator value is used to measure the model indicator. The model indicator here can be prediction accuracy, an AUC indicator, a PR curve, etc. The indicator value corresponding to the model indicator can be used to describe performance of the updated service model on the second sample in the test set.

Generally, in a case in which the model indicator satisfies a predetermined condition, subsequent service processing can be performed by using the service model with an updated weight, for example, continuing to be used to predict whether a risky operation such as user fraud or a gray market transaction exists. In a case in which the model indicator does not satisfy the predetermined condition, a new base learner can be added to the service model to adapt to a new service data distribution need. A new base learner can be added by using the method shown in FIG. 3, and details are omitted here for simplicity again.

Recalling the above process, the service model update method provided under the technical concept of this specification is used for updating a service model under the gradient boosting tree architecture. The service model can include several base learners, and the service model update method can include two parts: offline update and online update. To enable the service model to be stably updated in an online prediction phase, in the technical solution provided in this specification, during offline training of the service model, a training concept of increasing the quantity of base learners gradually based on a gradient boosting tree is used. For a newly added base learner used to fit a residual, only a component having a relatively small correlation with a known base learner is fitted by using orthogonal decomposition of a gradient, so a model space of the base learner is expanded, and a weighting coefficient of each base learner is enabled to have learnability.

As such, in an online prediction phase, the weight coefficient of each base learner can be updated by using stream data, so an effective solution can be provided for continuous online update of a gradient boosting tree model, so as to avoid infinite enlargement of a scale of a prediction model. In a case in which service processing efficiency of the prediction model is maintained, a service processing result of the prediction model is optimized, so the prediction model continuously adapts to new service data.

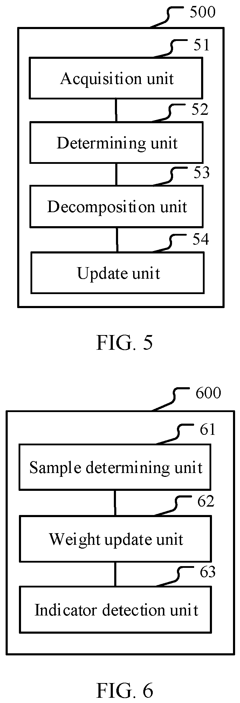

According to an embodiment of another aspect, a service model training apparatus is further provided. The apparatus can be disposed in a computer, a terminal, or a server having a specific computing capability. A service model here can be a weighted form of several base learners based on a gradient boosting tree architecture. FIG. 5 shows a service model training apparatus 500, according to an embodiment. As shown in FIG. 5, the apparatus 500 can include:

an acquisition unit 51, configured to obtain each training sample, where a single training sample has a corresponding service feature and service target value, and a predicted value obtained by processing the service feature by using a current service model;

a determining unit 52, configured to determine a first gradient vector of the current service model on each training sample, where a single element of the first gradient vector corresponds to a single training sample;

a decomposition unit 53, configured to separately perform orthogonal decomposition of the first gradient vector for each base learner in the current service model, so as to update the first gradient vector by using a gradient component perpendicular to each base vector, where a single base vector is formed by a predicted value of a corresponding single base learner for each training sample; and

an update unit 54, configured to obtain a new base learner and its weight with an objective of minimizing a residual determined according to an updated first gradient vector, so as to update the current service model.

A service model trained by using the apparatus shown in FIG. 5 can be used for online service processing, for example, detecting whether a risky operation such as user fraud or a gray market transaction exists. To ensure accuracy of online prediction, online service data can be used to dynamically adapt and update the service model. FIG. 6 shows a service model online update apparatus, according to an embodiment of this specification. The apparatus can be disposed in a computer, a terminal, or a server having a specific computing capability, for example, a server that provides support for a platform providing asset transactions for a user.

As shown in FIG. 6, a service model online update apparatus 600 according to an embodiment can include:

a sample determining unit 61, configured to determine several first samples of a training set and several second samples of a test set according to current incremental data;

a weight update unit 62, configured to update, by using the several first samples, weights separately corresponding to each base learner; and

an indicator detection unit 63, configured to check a model indicator of an updated service model by using the several second samples to determine, according to an indicator value of the model indicator, whether to add a new base learner to the service model.

It is worthwhile to note that the apparatuses 500 and 600 shown in FIG. 5 and FIG. 6 are respectively corresponding to the methods described in FIG. 3 and FIG. 4. Corresponding descriptions in the method embodiments shown in FIG. 3 and FIG. 4 are also applicable to the apparatuses 500 and 600. Details are omitted here for simplicity.

According to an embodiment of another aspect, a computer-readable storage medium is further provided, on which a computer program is stored. When the computer program is executed in a computer, the computer is caused to perform the methods described with reference to FIG. 3 and FIG. 4.

According to an implementation of still another aspect, a computing device is further provided, and includes a memory and a processor. The memory stores executable code, and when the processor executes the executable code, the methods described with reference to FIG. 3 and FIG. 4 is implemented.

A person skilled in the art should be aware that in the previous one or more examples, the functions described in the embodiments of this specification can be implemented by hardware, software, firmware, or any combination thereof. When this specification is implemented by software, the functions can be stored in a computer-readable medium or transmitted as one or more instructions or code in the computer-readable medium.

The objectives, technical solutions, and benefits of the technical concept of this specification are further described in detail in the earlier-described specific implementations. It should be understood that the earlier-described descriptions are merely specific implementations of the technical concept of this specification, but are not intended to limit the protection scope of the technical concept of this specification. Any modification, equivalent replacement, or improvement made based on the technical solutions of the embodiments of this specification shall fall within the protection scope of the technical concept of this specification.

## Claims

1. A service model training method, wherein the service model is a weighted form of several base learners, and the method comprises: multiple training periods added with a base learner, and in a single training period:

   obtaining each training sample, wherein a single training sample has a corresponding service feature and service target value, and a predicted value obtained by processing the service feature by using a current service model;
   determining a first gradient vector of the current service model on each training sample, wherein a single element of the first gradient vector corresponds to a gradient determined based on a single training sample;

separately performing orthogonal decomposition of the first gradient vector for each base learner in the current service model, so as to update the first gradient vector by using a gradient component perpendicular to each base vector, wherein a single base vector is formed by a predicted value of a corresponding single base learner for each training sample; and

obtaining a new base learner and its weight with an objective of minimizing a residual determined according to an updated first gradient vector, so as to update the current service model.

2. The method according to claim 1, wherein determining the first gradient vector of the current service model on each training sample comprises:

   determining a predicted loss according to a sum of losses of the current service model on each training sample based on a comparison between the service target value and the predicted value of each training sample; and determining the first gradient vector according to a respective partial derivative of the predicted loss for a prediction result in each training sample.

3. The method according to claim 1, wherein the current service model comprises a first base learner, and separately performing the orthogonal decomposition of the first gradient vector for each base learner in the current service model, so as to update the first gradient vector by using a gradient component perpendicular to each base vector comprises:

   determining a first base vector corresponding to the first base learner, wherein a single dimension of the first base vector is a processing result of processing a single training sample by using the first base learner; determining a first component of the first gradient vector in a direction of the first base vector according to a product of the first gradient vector and the first base vector; and updating the first gradient vector by using a difference between the first gradient vector and the first component as a second component of the first gradient vector in a vertical direction of the first base vector.

4. The method according to claim 3, wherein the first component is a product of the first base vector and a first coefficient, and the first coefficient is a ratio of the product of the first gradient vector and the first base vector to a modulus of the first base vector.

5. The method according to claim 4, wherein the first base learner corresponds to a first weight, and the method further comprises:
   using the first coefficient as a gradient corresponding to the first weight, and updating the first coefficient by using a predetermined learning rate in a gradient direction.

6. The method according to claim 1, wherein obtaining the new base learner and its weight with an objective of minimizing a residual determined according to an updated first gradient vector, so as to update the current service model comprises:

   determining a second base learner as a new base learner with an objective of minimizing a predicted loss on each training sample after a base learner is added; determining a second weight corresponding to the second base learner with an objective of minimizing a predicted loss of the current service model on each training sample and a fitting result of the new base learner to the residual; and updating the current service model according to a product of the second weight and the second base learner.

7. A service model online update method, wherein the service model is a weighted sum of several base learners and is trained in the manner of claim 1; and the method comprises:

   determining several first samples of a training set and several second samples of a test set according to current incremental data; updating, by using the several first samples, weights separately corresponding to each base learner; and checking a model indicator of an updated service model by using the several second samples to determine, according to an indicator value of the model indicator, whether to add a new base learner to the service model.

8. The method according to claim 7, wherein updating, by using the several first samples, the weights separately corresponding to each base learner comprises:

determining a gradient of each weight according to a service processing result of the service model for each first sample; and

updating each weight according to a corresponding gradient by using a predetermined learning rate.

9. The method according to claim 7, wherein each base learner comprises a third base learner, the third base learner corresponds to a third weight, and determining the gradient of each weight according to a service processing result of the service model for each first sample comprises:

obtaining a first predicted loss of the service model by using the service processing result of the service model for each first sample; and

determining a gradient respectively corresponding to each weight under the first predicted loss, wherein for a single weight, a corresponding gradient is determined in the following manner: determining a first-order derivative and a second-order derivative of the first predicted loss for the single weight; and obtaining the gradient of the single weight by using a product of an inverse of the second-order derivative and the first-order derivative.

10. The method according to claim 7, wherein a new base learner and a corresponding weight are added to the service model in the manner of claim 1 to update the service model when the model indicator does not satisfy a predetermined condition.

11. A service model training apparatus, wherein a service model is a weighted form of several base learners, and the apparatus comprises:

an acquisition unit, configured to obtain each training sample, wherein a single training sample has a corresponding service feature and service target value, and a predicted value obtained by processing the service feature by using a current service model;

a determining unit, configured to determine a first gradient vector of the current service model on each training sample, wherein a single element of the first gradient vector corresponds to a single training sample;

a decomposition unit, configured to separately perform orthogonal decomposition of the first gradient vector for each base learner in the current service model, so as to update the first gradient vector by using a gradient component perpendicular to each base vector, wherein a single base vector is formed by a predicted value of a corresponding single base learner for each training sample; and

an update unit, configured to obtain a new base learner and its weight with an objective of minimizing a residual determined according to an updated first gradient vector, so as to update the current service model.

12. A service model online update apparatus, wherein a service model is a weighted sum of several base learners and is trained by using the apparatus according to claim 11; and the online update apparatus comprises:

a sample determining unit, configured to determine several first samples of a training set and several second samples of a test set according to current incremental data;

a weight update unit, configured to update, by using the several first samples, weights separately corresponding to each base learner; and

an indicator detection unit, configured to check a model indicator of an updated service model by using the several second samples to determine, according to an indicator value of the model indicator, whether to add a new base learner to the service model.

13. A computer-readable storage medium that stores a computer program, wherein when executed on a computer, the computer program causes the computer to perform the method according to any one of claims 1 to 10.

14. A computing device, comprising a memory and a processor, wherein the memory stores executable code, and when executing the executable code, the processor implements the method according to any one of claims 1 to 10.

FIG. 1

FIG. 2

⌐ 301

Obtain each training sample

⌐ 302

Determine a first gradient vector of the current service model on each training sample

⌐ 303

Separately perform orthogonal decomposition of the first gradient vector for each base learner in the current service model, so as to update the first gradient vector by using a gradient component perpendicular to each base vector

⌐ 304

Obtain a new base learner and its weight with an objective of minimizing a residual determined according to an updated first gradient vector, so as to update the current service model

FIG. 3

⌐ 401

Determine several first samples of a training set and several second samples of a test set according to current incremental data

⌐ 402

Update, by using the first samples, a weight of each base learner

⌐ 403

Check a model indicator of an updated service model by using the second samples to determine, according to an indicator value of the model indicator, whether to add a new base learner to the service model

FIG. 4

500

51

Acquisition unit

52

Determining unit

53

Decomposition unit

54

Update unit

FIG. 5

600

61

Sample determining unit

62

Weight update unit

63

Indicator detection unit

FIG. 6

Europäisches
Patentamt

European
Patent Office

Office européen
des brevets

## EUROPEAN SEARCH REPORT

**Application Number**

EP 24 21 6223

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FAN YANG ET AL: "Orthogonal Gradient Boosting for Simpler Additive Rule Ensembles", ARXIV.ORG, CORNELL UNIVERSITY LIBRARY, 201 OLIN LIBRARY CORNELL UNIVERSITY ITHACA, NY 14853, 24 February 2024 (2024-02-24), XP091688562, * the whole document * | 1-14 | INV.<br>G06N20/20<br>G06N5/01<br>G06Q30/018<br>G06Q10/04<br>G06Q10/067<br>G06Q30/0201<br>G06Q30/0207<br>G06Q30/0601<br>G06Q30/0241<br>G06Q10/0635 |
| A | CN 109 978 179 A (RAJAX NETWORK TECH CO LTD) 5 July 2019 (2019-07-05) * see the enclosed machine-translation * | 7-10, 12-14 | |

|  |  |  | TECHNICAL FIELDS SEARCHED (IPC) |
|---|---|---|---|
|  |  |  | G06N |

The present search report has been drawn up for all claims

| Place of search | Date of completion of the search | Examiner |
|---|---|---|
| The Hague | 13 May 2025 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 693 121 A1**

## ANNEX TO THE EUROPEAN SEARCH REPORT
## ON EUROPEAN PATENT APPLICATION NO.

EP 24 21 6223

13-05-2025

| Patent document cited in search report | Publication date | Patent family member(s) | Publication date |
|---|---|---|---|
| CN 109978179 A | 05-07-2019 | NONE | |